# EUROPÄISCHE PATENTANMELDUNG

(11) **EP 2 273 161 A1**
(43) Veröffentlichungstag der Anmeldung: **12.01.2011**
(21) Anmeldenummer: 09008841.0
(22) Anmeldetag: 07.07.2009
(51) Int. Cl.: F16J 15/06, F16J 15/20, C10M 171/00

(54) **Dichtung**

(71) Anmelder: Carl Freudenberg KG, 69469 Weinheim (DE)
(72) Erfinder: Klenk, Thomas, Dr., 69221 Dossenheim (DE); Kritzer, Peter, Dr., 67147 Forst (DE); Vogel, Ralf, Blessigton Co. Wicklow (IE); Schmidt, Julia, Dr., 35394 Gießen (DE); Lang, Holger, 79418 Schliengen (DE)

(57) **Zusammenfassung**

Die Erfindung betrifft eine Dichtung, insbesondere verwendbar als Hochtemperaturdichtung, umfassend ein Dichtelement aus einem porösen Material, welches wenigstens teilweise mit einem Wirkstoff getränkt ist. Eine hohe Temperaturstabilität und ein sehr gutes Dichtverhalten wird dadurch erzielt, dass der Wirkstoff eine ionische Flüssigkeit umfasst.

## Beschreibung

### Technisches Gebiet

Die Erfindung betrifft eine Dichtung, insbesondere für Hochtemperaturanwendungen, umfassend ein Dichtelement aus einem porösen Material, welches wenigstens teilweise mit einem Wirkstoff getränkt ist.

### Stand der Technik

In Flanschverbindung von Rohrleitungen sowie Stopfbuchsabdichtungen von Armaturen werden für Anwendungen oberhalb einer Temperatur von 200 °C derzeit überwiegend Flachdichtungen bzw. Stopfbuchspackungen auf Basis von Graphit- bzw. Kohlefasern eingesetzt. Bevorzugt kommen derzeit Dichtungen aus expandiertem Graphit zum Einsatz. Expandierter Graphit verfügt aufgrund seiner hohen Porosität über ein ausgezeichnetes Verformungs- und Rückfederungsverhalten unter mechanischer Last. Darüber hinaus besitzt er eine ausgezeichnete thermische Beständigkeit von bis zu etwa 500 °C. Der Graphit wird dabei mittels eines speziellen Herstellungsverfahrens thermisch expandiert und erreicht so die für das Federungsverhalten notwendige Flexibilität bzw. Porosität.

Auf der anderen Seite besitzen Flachdichtungen auf Basis von expandiertem Graphit ein nur eingeschränktes Abdichtungsvermögen und erreichen selbst unter höchster mechanischer Last, d.h. bei höchsten Verdichtungen und damit geringster Porosität, nicht die in der TA Luft (Technische Anleitung zur Reinhaltung der Luft) bzw. im Clean Air Act geforderten Grenzwerte. Aus diesem Grund werden beispielsweise Flachdichtungen auf Basis von expandiertem Graphit häufig mit Innenbördel aus Edelstahl oder entsprechenden metallischen Einlagen oder Kaschierungen mit PTFE usw. versehen.

Bei Packungsringen in Stopfbuchsanwendungen von Rohdeitungsarmaturen treten zusätzlich zu dem verbesserungswürdigen Abdichtungsverhalten mit Packungsringen aus expandiertem Reingraphit häufig noch große Anwendungsproblem aufgrund der starken Anbackneigung der Graphitpackungsring bei auf und ab bewegten Spindein (Armaturenpackungen) bzw. rotierend bewegten Wellen (Pumpen- Rührerpackungen usw.) auf. Diese Anbackungen resultieren in großem Graphitverschleiß und vorzeitigen Funktionsausfällen der eingesetzten Graphitpackungen.

Aus diesen Gründen werden Packungsringe aus gepresstem flexiblem Graphit, aus gepresstem beschichtetem Kohlefaservlies bzw. geflochtene Packungsringe aus expandiertem flexiblem Graphit bzw. geflochtener Kohlefaser zur besseren Schmierung der Dichtungsoberfläche häufig mit speziellen niedrigviskosen Ölen imprägniert.

Nachteilig an dieser bekannten Lösung ist, dass die in der Praxis eingesetzten Öle (meist niedrigviskose Öle) bei der Montage oder beim späteren Betriebsdruck teilweise wieder aus den Poren herausgepresst werden. Zusätzlich besitzen die für diese Anwendung üblicherweise eingesetzten Öle, insbesondere auch sog. Spezielle Thermalöle, einen relativ niedrigen Verdampfungspunkt, so dass sie bei Dichtungen für Hochtemperaturanwendungen nicht eingesetzt werden können.

### Darstellung der Erfindung

Aufgabe der Erfindung ist, eine Dichtung der eingangs genannten Art so weiterzubilden, dass sie auch bei hohen Temperaturen insbesondere auch über lange Zeiträume sich durch hervorragende Dichtungs- und Reibungseigenschaften auszeichnet.

Diese Aufgabe wird mit einer Hochtemperaturdichtung gemäß Patentanpruch 1 gelöst. Vorteilhafte Ausgestaltungen der Erfindung werden in den Unteransprüchen beschrieben.

Gemäß der Erfindung zeichnet sich eine Dichtung, welche ein Dichtelement aus einem porösen Material umfasst, wobei das Dichtelement wenigstens teilweise mit einem Wirkstoff getränkt ist, dadurch aus, dass der Wirkstoff eine ionische Flüssigkeit umfasst.

Ionische Flüssigkeiten an sich sind bekannt und in der Patentliteratur vielfach beschrieben. Man versteht darunter niedrig schmelzende organische Salze mit Schmelzpunkten zwischen 100 °C und - 90 °C, wobei die meisten der bekannten ionischen Flüssigkeiten bei Raumtemperatur in flüssiger Form vorliegen. Sie sind sehr temperaturstabil, nicht entzündlich und besitzen praktisch keinen messbaren Dampfdruck. Ihre Zersetzungstemperaturen liegen oftmals oberhalb von 400 °C. Durch geeignete Wahl ihrer Kationen und Anionen lassen sich die Eigenschaften ionischer Flüssigkeiten über weite Bereiche variieren.

Es hat sich in überraschender Weise gezeigt, dass eine Dichtung mit einem Dichtelement aus einem porösen Material, bei welchem die Poren wenigstens teilweise mit einer ionischen Flüssigkeit gefüllt sind, über hervorragende Dichtungs- und Reibungseigenschaften, insbesondere auch bei hohen Temperaturen verfügt. Dadurch, dass die ionische Flüssigkeit praktisch nicht verdampft, entweicht sie auch bei Anwendungen unter hohen Temperaturen über längere Zeiträume nicht aus den Poren des Dichtkörpers. Sie tritt auch nicht in das Medium ein, gegen das abgedichtet werden soll, noch löst sich dieses Medium in der ionischen Flüssigkeit. Die Dichtwirkung bleibt somit auch bei sehr hohen Temperaturen erhalten.

Die Verwendung von ionischen Flüssigkeiten als Sperrflüssigkeiten in Dichtungssystemen ist bekannt, so z. B. aus der DE 10 2005 003 115 A1 oder aus der DE 10 2005 034 908 A1. Hierbei wird die ionische Flüssigkeit in der Regel jeweils zwischen zwei Dichtungen angordnet und hilft dabei, die äußeren Leckagewege an der Oberfläche der Dichtungen abzusperren.

Im Gegensatz dazu ist die ionischen Flüssigkeit gemäß der vorliegenden Erfindung Teil der Dichtung selbst. Überraschend ist hierbei, dass es gelingt, eine ionische Flüssigkeit, die ja ein flüssiges Salz darstellt, in die feinen Poren eines porösen Körpers einzubringen. Dort sperrt sie die inneren Leckagewege über das gesamte Volumen des porösen Materials ab.

Die ionische Flüssigkeit kann mittels unterschiedlicher Verfahren in die Poren des Dichtelements eingebracht werden. So kann beispielsweise entweder das fertig gestellte Dichtelement mit einer ionischen Flüssigkeit getränkt werden, oder aber ein Vorprodukt (Halbzeug) davon, beispielsweise eine Bahnenware vor der Weiterverarbeitung. Für das Erzielen einer guten Dichtwirkung reicht es aus, das Dichtelement nur bereichsweise mit der ionischen Flüssigkeit zu tränken. So ist beispielsweise auch eine Tränkung nur in einer äußeren Zone des Dichtelments denkbar, zum Beispiel in Form einer Beschichtung, bei welcher die ionische Flüssigkeit nur in die Poren eines äußeren Randbereichs eines Dichtelementes eindringt. Eine Beschichtung ist insbesondere dann vorteilhaft, wenn insbesondere die Reibungseigenschaften des Dichtelementes verbessert werden sollen.

Das Einbringen der ionischen Flüssigkeit in das poröse Material des Dichtelements kann beispielsweise im Rahmen eines freien Imprägnierens auf Basis der Kapillarwirkung erfolgen, Hierbei wird das Dichtelement in die ionische Flüssgkeit eingetaucht. Ein weiteres Verfahren sieht die Anwendung von Vakuum zur Evakuierung der Luft aus den Poren des porösen Materials vor (Vakuumfiltrierung). Dadurch wird in vielen Fällen die Beladung des Materials mit der ionischen Flüssigkeit unterstützt bzw. beschleunigt. Bei diesem Verfahren befinden sich das Dichtelement und die ionische Flüssigkeit in einem Rezipienten, die Luft wird über eine Vakuumpumpe abgesaugt.

Es hat sich herausgestellt, dass die beste Dichtwirkung dann erzielt wird, wenn der Befüllungsgrad größer oder gleich 5 %, besonders bevorzugt größer oder gleich 20 % und ganz besonders bevorzugt größer oder gleich 30 % ist. Unter Befüllungsgrad wird hierbei die Gewichtszunahme des Dichtelements aus dem porösen Material durch das Befüllen mit der ionischen Flüssigkeit ins Verhältnis gesetzt zu dem Gewicht des porösen Materials vor dem Befüllen verstanden.

Welche ionische Flüsigkeit geeignet ist, hängt von dem jeweiligen Anwendungszweck ab. Wie bereits oben erwähnt wurde, können die Eigenschaften ionischer Flüssigkeiten je nach Bedarf über weite Bereiche varriert werden. Im Folgenden werden ohne Beschränkung der Allgemeinheit

Als Anionen können ohne Beschränkung der Allgemeinheit Halogenide und komplexere Ionen wie Tetrafluoroborat, Trifluoracetat, trifluorinetahnsulfonat, Hexafluorophosphat, Phosphinate und Tosylate zur Anwendung kommen. Aber auch organsiche Ionen wie Imide und Amide stellen geeignete Anionen dar.

Mögliche Kationengruppen können sein (wobei unter "R" organische Reste zu verstehen sind; s. hierzu z. B. EP 2 022 840 A2):
I. R₁R₂R₃R₄N⁺
II. R₁R₂N⁺=CR₃R₄
III. R₁R₂R₃R₄P⁺
IV. R₁R₂R₃S⁺
V. R₁R₂P⁺=CR₃R₄

Die Kationengruppe I zeichnet sich dadurch aus, dass es bei dieser Art der Salze relativ einfach ist, den Schmelzpunkt über die Struktur (aromatisch, verzweigt bzw. linear) der Reste einzustellen, so dass ein sehr breiter Bereich an Anwendungen abgedeckt ist. Auf der anderen Seite ist Sticksoff ein stark elektronegatives Element, so dass dessen Salze relativ polar z. B. im Vergleich zu den Vertretem der Gruppe III sind, was sich negativ auf Beständigkeit der mit dieser ionischen Flüssigkeit in Kontakt kommenden Bauteile (Metall ⇒ Korrosion) auswirken kann. Die vergleichsweise hohe Polarität macht den Einsatz der Additiven, welche die Viskosität der Flüssigkeiten steuern, notwendig, um diese als Wirkstoff zum Tränken des porösen Materials einsetzen zu können, was bei weniger polaren Vertretern (Gruppe III und Gruppe IV) entfällt.

Der große Vorteil der Vertreter der Gruppen II und V ist unter anderem deren hohe thermische Beständigkeit. Mit diesen Salzen getränkte Bauteile zeigen aufgrund des hohen Gehalts an Stickstoff bzw. Phosphor (die Verwendung von Anionen, welche Halogenid, Sauerstoff, Phosphor, Schwefel-Atome enthalten, würde diesen Effekt unterstützen) Fire-Safe-Eigenschaften.

Die Vertreter der Gruppen III und IV sind aufgrund ihrer Eigenschaften wie niedrige Viskosität und geringe Acidität für die Anwendung von großem Interesse. Auch die Ausrüstung der Dichtungen mit den Salzen könnte Fire-Safe-Produkte ergeben. So wurde von Sigma-Aldrich in ChemFiles (Volume 6, Number 9, 2006) berichtet, dass Phosphoniumsalze mit z. B. Dibutylphosphat als Anion eine sehr gute thermische Beständigkeit zeigten und bei thermischem Abbau ab 1300°C anorganische Phosphate bildeten, welche die weitere Verbreitung der Flame (Char-Bildung) unterdrückten. Soll die Beschichtung erst bei höheren Temperaturen z. B. ab 100 °C in flüssigen Aggregatzustand übergehen, so stoßen die Vertreter dieser Klassen an ihre Grenzen, was sich als Nachteil erweisen könnte.

Um das Eindringen der Umgebungsfeuchtigkeit zu verhindern, kommen vorzugsweise ionische Flüssigkeiten mit hydrophoben Eigenschaften zum Einsatz.

Für verschiedene Anwendungen kann es auch zweckmäßig sein, eine ionische Flüssigkeit zu verwenden, die bei Raumtemperatur fest ist und erst bei höheren Temperaturen in die flüssige Phase übergeht. Das Tränken des Dichtelements oder eines Vorprodukts mit der ionischen Flüssigkeit erfolgt in diesen Fällen bei einer Temperatur obetrhalb der Schmelztemperatur. Diese Ausführungsform hat den Vorteil, dass die ionische Flüssgkeit bei Raumtemepratur nicht aus den Poren des Dichtelements herauslaufen kann.

Als Werkstoff für das Dichtelelement können je nach Anwendungszweck die unterschiedlichsten Dichtungsmaterialien zur Anwendung kommen. Für Temperaturen unterhalb von etwa 120 °C sind beispielsweise Elastomere, insbesondere zelluläre Elastomere geeignet. Zwischen ca. 120 °C und etwa 250 °C können beispielsweise PTFE oder zelluläre Perfluor-Elastomere eingesetzt werden. Für Hochtemperaturanwendungen, d. h. für Anwendungen bei Temperaturen oberhalb von etwa 250 °C besteht das Dichtungselement vorzugsweise aus einem besonders temperaturstabilen Material, wie z. B. Teflon, Graphit, expandierter Graphit, Kohle, Metall, Basalt, Glimmer, Teflon, Bornitrid und/oder Keramik, das beispielsweise in Form von Fasern, (Kohlefasern, Kohlefaservilesstoff, ggf. mit Graphit imprägniert), Garnen und/oder Fäden vorliegen kann, welche zu einem ggf. verpressten Gewebe, Gewirke, Gestrick, Flechtwerk und/oder Vliesstoff, insbesondere zu Bändern daraus, verarbeitet worden sind. Soweit das Material in Form von Flocken vorliegt, wie z. B. Graphit, werden diese direkt zu Bändern verpresst.

Vorzugsweise wird als temperaturstabiles Material Graphit, insbesondere expandierter Graphit oder Graphitvliesstoff (ggf. mit Graphit imprägniert) eingesetzt. Expandierter Graphit verfügt, wie bereits eingangs erwähnt wurde, aufgrund seiner hohen Porosität über ein ausgezeichnetes Verformungs- und Rückfederungsverhalten unter mechanischer Last.

Gemäß einer weiteren bevorzugten Ausführunsgform der Erfindung wird die ionische Flüssigkeit mit Füllstoffen angereichert. Diese können beispielsweise dazu dienen, die Viskosität weiter zu abzusenken. Bevorzugt sind solche Partikel, die mit der ionischen Flüssigkeit physikalische Wechselwirkungen eingehen (vd-Waals-Kräfte; Dipole usw.) Zudem ergeben sich bei Einsatz einer Ionische Flüssigkeken-basierte Dispersion Kosteneinsparungen, soefem Partikel zum Einsatz kommen, die preiswerter als die ionische Flüssigkeit sind. Die Partikel können Polymere, Metalle, anorganische Metall- oder Nichtmetall-Verbindungen sein.

Aufgrund ihrer besonderen Temperaturstabilität und ihres hervorragenden Dichtverhaltens kommt eine erfindungsgemäße Dichtung insbesondere bei Hochtemperaturanwendungen, vorzugsweise bei Temperaturen oberhalb von 250 °C zum Einsatz, zum Beispiel als Stopfbuchspackung oder aber auch Flachdichtung in Flanschverbindungen. Weiterhin bevorzugt ist die Verwendung einer erfindungsgemäßen Dichtung als O-Ring oder Formdichtung.

### Ausführung der Erfindung

### 1. Ausführungsbeispiel

Ein Packungsring aus Graphit mit einer Dichte von 1,6 g/cm³ und den Abmessungen 40 x 56 x 8 mm³ wurde gewogen, dann mittels Vakuumfiltrierung mit Trihexyltetradecylphosphonium bis (trifluormethylsulfonyl)imide getränkt. Anschließend wurde der befüllte Packungsring gewogen. Die Gewichtszunahme ins Verhätnis gesetzt zum Ausgangsgewicht (Befüllungsgrad) betrug 20 %.

Anschließend wurde ein Leckageversuch an einem Packungssatz aus 5 wie oben beschrieben behandelten Ringen bei einer Vorspannung von 30 MPa und 40 bar Helium bei Raumtemperatur durchgeführt. Die dabei ermittelten Leckagewerte waren um einen Faktor von 100.000 bis 1.000.000 geringer als bei einem Packungssatz aus 5 unbehandleten Ringen. Beim anschließenden Leckageversuch bei 300 °C betrug die Verbesserung des Abdichtverhaltens immer noch einen Faktor von 100 -1.000 gegenüber nicht mit ionischer Flüssigkeit getränkten Graphitpackungsringen derselben Dichte.
Die Reibung des Packungssatzes aus den mit der ionischen Flüssigkeit getränkten Ringe war ebenfalls gegenüber dem Packungssatz aus unbehandleten Ringen deutlich reduziert. Sie lag auf einem Niveau der mit Ölen getränkten Dichtungen.

### 2. Ausführungsbeispiel

Ein Packungsring aus Bändern aus abwechselnden Lagen aus Graphitfolie und mit Graphit imprägniertem Kohlefaservliesstoff wurde in eine Bad aus Trihexyltetradecylphosphonium bis (trifluormethylsulfonyl)imide gelegt. Nach dem Herausnehmen und Wiegen betrug der Befüllungsgrad ca. 30 %. Dieser hohe Befüllungsgrad wird auf die Saugwirkung des Vliestoffs zurückgeführt.

## Patentansprüche

1. Dichtung, insbesondere verwendbar als Hochtemperaturdichtung, umfassend ein Dichtelement aus einem porösen Material, welches wenigstens teilweise mit einem Wirkstoff getränkt ist, **dadurch gekennzeichnet, dass** der Wirkstoff eine ionische Flüssigkeit umfasst.

2. Dichtung nach Anspruch 1, dass der Befüllungsgrad des Dichtelements nach dem Tränken mit der ionischen Flüssigkeit größer oder gleich 5 %, vorzugsweise größer oder gleich 20 % ist, und besonders bevorzugt größer oder gleich 30 % ist.

3. Dichtung nach einem der Ansprüche 1 oder 2, **dadurch gekennzeichnet, dass** die ionische Flüssigkeit hydrophobe Eigenschaften aufweist.

4. Dichtung nach einem der Ansprüche 1 bis 3, **dadurch gekennzeichnet, dass** die ionische Flüssigkeit mit Füllstoffen angereichert ist.

5. Dichtung nach einem der Anspürche 1 bis 4, **dadurch gekennzeichnet, dass** als poröses Material bei Anwendungen im Temperaturbereich kleiner oder gleich etwa 120 °C Elastomere, insbesondere zelluläre Elastomere, verwendet werden, bei Anwendungen im Temperaturbereich zwischen etwa 120 °C und etwa 250 °C PTFE oder zelluläre Perfluor-Elastomere und bei Anwendungen im Hochtemperaturbereich, d. h. oberhalb von etwa 250 °C, Teflon, Graphit, expandierter Graphit, Kohle, Metall, Basalt, Glimmer, Teflon, Bornitrid und/oder Keramik.

6. Dichtung nach einem der Ansprüche 1 bis 5, **dadurch gekennzeichnet, dass** das poröse Material in Form von Fasern, Garnen und/oder Fäden vorliegt, welche zu einem ggf. verpressten Gewebe, Gewirke, Gestrick, Flechtwerk und/oder Vliesstoff, insbesondere zu Bändern daraus, verarbeitet worden sind, oder in Form von Flocken, die zu Bändern verpresst sind.

7. Verwendung einer Dichtung nach einem der Ansprüche 1 bis 6 als Stopfbuchspackung oder Flachdichtung für Flanschverbindungen.

8. Verwendung einer Dichtung nach einem der Ansprüche 1 bis 7 als O-Ring oder Formdichtung.
